# EUROPEAN PATENT APPLICATION

(11) **EP 4 760 204 A1**
(43) Date of publication of application: **17.06.2026**
(21) Application number: 24876002.7
(22) Date of filing: 10.05.2024
(51) Int. Cl.: G01B 21/08

(54) **HEIGHT MEASUREMENT DEVICE, MATERIAL-CONVEYING PRODUCTION LINE AND HEIGHT MEASUREMENT METHOD**

(30) Priority: 13.10.2023 CN 202311323928
(71) Applicant: Contemporary Amperex Technology Co., Limited, Ningde, Fujian 352100 (CN)
(72) Inventor: WU, Kai, Ningde, Fujian 352100 (CN); ZHENG, Panze, Ningde, Fujian 352100 (CN); LI, Bingchao, Ningde, Fujian 352100 (CN); QIU, Leigang, Ningde, Fujian 352100 (CN)
(74) Representative: Lorenz Seidler Gossel Part. mbB
(86) International application number: PCT/CN2024/092236
(87) International publication number: WO 2025/077175

(57) **Abstract**

The present disclosure provides a height measurement apparatus, a material-conveying production line, and a height measurement method, relating to the technical field of measurement. The height measurement apparatus provided in the present disclosure includes a base, a power mechanism, and a measuring device. The power mechanism is disposed on the base. The measuring device includes an acquisition surface, where an orientation of the acquisition surface is parallel to a first direction. When the measuring device is in a measuring state, and the acquisition surface is opposite an object to be measured, the measuring device outputs first-type information. When the acquisition surface is not opposite the object to be measured, the measuring device outputs second-type information. The measuring device is disposed at an output end of the power mechanism, such that the measuring device can move relative to the base when driven by the power mechanism, thereby changing a measuring region of the measuring device. A motion of the measuring device relative to the base includes displacement in a second direction, the second direction being perpendicular to the first direction. The height measurement apparatus provided in the present disclosure can reduce costs. The height measurement apparatus provided in the present disclosure is configured to measure a height.

## Description

### CROSS-REFERENCE TO RELATED APPLICATIONS

The present disclosure is proposed based on Chinese Patent Application No. 202311323928.9, filed on October 13, 2023 and entitled "HEIGHT MEASUREMENT APPARATUS, MATERIAL-CONVEYING PRODUCTION LINE, AND HEIGHT MEASUREMENT METHOD", and claims the priority of the Chinese Patent Application, the entire content of which is incorporated herein by reference.

### TECHNICAL FIELD

The present application relates to the technical field of measurement, and in particular to a height measurement apparatus, a material-conveying production line, and a height measurement method.

### BACKGROUND

In the related art, a height measurement apparatus is required to be provided with a large number of measuring devices, where a plurality of measuring devices are respectively arranged at a plurality of height positions, so as to measure heights of objects to be measured that are of different heights. However, the large number of measuring devices results in high costs of the height measurement apparatus.

### SUMMARY

The present disclosure provides a height measurement apparatus, a material-conveying production line, and a height measurement method, which can reduce costs.

According to a first aspect, the present disclosure provides a height measurement apparatus. The height measurement apparatus includes a base, a power mechanism, and a measuring device, where the power mechanism is disposed on the base. The measuring device includes an acquisition surface, where an orientation of the acquisition surface is parallel to a first direction. When the measuring device is in a measuring state, and the acquisition surface is opposite an object to be measured, the measuring device outputs first-type information. When the acquisition surface is not opposite the object to be measured, the measuring device outputs second-type information. The measuring device is disposed at an output end of the power mechanism, such that the measuring device can move relative to the base when driven by the power mechanism, thereby changing a measuring region of the measuring device. A motion of the measuring device relative to the base includes displacement in a second direction.

By disposing the measuring device at the output end of the power mechanism, the measuring device can be displaced in the second direction when driven by the power mechanism, such that the measuring device can move to positions matching edges of objects to be measured that are of different heights, so as to measure heights of the objects to be measured that are of different heights. By switching the position of the measuring device in the second direction, only few measuring devices are required to measure a variety of objects to be measured that are of different heights, which is conducive to reducing costs.

In a possible implementation of the present disclosure, the measuring device is slidably connected to the base, such that the measuring device is capable of moving relative to the base when driven by the power mechanism.

By slidably connecting the measuring device to the base, the position of the measuring device in the second direction can be conveniently adjusted. Moreover, the motion of the measuring device relative to the base is stable, and motion efficiency is high. During the motion, the orientation of the acquisition surface remains unchanged, and the acquisition surface can always acquire information, that is, the acquisition surface can acquire information at many positions in the second direction, which is conducive to improving the adaptability of the height measurement apparatus to objects to be measured that are of different heights.

In a possible implementation of the present disclosure, the height measurement apparatus further includes a guide rail and a slide block capable of matching each other to slide. The measuring device is slidably connected to the base through the guide rail and the slide block.

In a possible implementation of the present disclosure, the motion of the measuring device relative to the base that is driven by the power mechanism is movement in the second direction.

By enabling the motion of the measuring device relative to the base to be movement in the second direction, the motion of the measuring device in the second direction has high efficiency, which is conducive to improving working efficiency of the height measurement apparatus.

In a possible implementation of the present disclosure, the height measurement apparatus further includes an emitter. The emitter includes an emitting surface. An orientation of the emitting surface is perpendicular to the second direction. The emitting surface is level with the acquisition surface in the second direction. The emitting surface and the acquisition surface synchronously switch between states of being opposite and being not opposite the object to be measured. When the emitting surface is not opposite the object to be measured, the emitting surface emits information to the acquisition surface, such that the measuring device outputs the second-type information. When the emitting surface is opposite the object to be measured, the information emitted by the emitting surface is blocked by the object to be measured, such that the measuring device outputs the first-type information.

Whether the acquisition surface is opposite the object to be measured is confirmed by a state of whether the information emitted by the emitting surface is blocked by the object to be measured, which is conducive to measurement precision of the measuring device. The orientation of the emitting surface is perpendicular to the second direction, and the emitting surface is level with the acquisition surface in the second direction, that is, the information emitted by the emitting surface is level with the acquisition surface in the second direction. If the emitted information is blocked, the acquisition surface fails to acquire the emitted information, indicating that the acquisition surface is opposite the object to be measured. If the emitted information is not blocked, the emitted information is acquired by the acquisition surface, indicating that the acquisition surface is not opposite the object to be measured. This is conducive to improving the measurement precision.

In a possible implementation of the present disclosure, the emitting surface is disposed opposite the acquisition surface. An accommodating space is provided between the emitting surface and the acquisition surface in a direction in which the emitting surface is disposed opposite the acquisition surface.

The accommodating space can be used for placing the object to be measured therein.

In a possible implementation of the present disclosure, the emitter and the measuring device synchronously move relative to the base in the second direction, such that the emitting surface is level with the acquisition surface in the second direction.

By enabling the emitter and the measuring device to synchronously move relative to the base, the emitter can always keep at a position corresponding to the measuring device, and the information emitted by the emitter can always keep at a position level with the acquisition surface. In this way, only few emitters are required to satisfy the measurement requirements of measuring devices of different heights, which is conducive to reducing costs.

In a possible implementation of the present disclosure, the emitter is disposed at the output end of the power mechanism, such that the emitter and the measuring device synchronously move relative to the base. An orientation of the emitting surface is the same as the orientation of the acquisition surface. The height measurement apparatus further includes a reflection structure. The emitting surface and the acquisition surface are both disposed opposite the reflection structure in the first direction. The reflection structure is used for reflecting a signal emitted by the emitting surface to the acquisition surface.

By disposing both the emitter and the measuring device at the output end of the power mechanism, a synchronous motion of the emitter and the measuring device can be conveniently implemented. The reflection structure can reflect the signal emitted by the emitting surface to the acquisition surface, such that when the emitter and the measuring device are both disposed at the output end of the power mechanism, a long transmission path for the information emitted by the emitter can still be ensured, facilitating the transmission path for the information emitted by the emitter passing through the object to be measured, that is, reserving a large space for disposing the object to be measured, thereby facilitating the disposing of the object to be measured.

In a possible implementation of the present disclosure, the second direction is a vertical direction. The height measurement apparatus is configured to measure a height of batteries stacked in the vertical direction. A cushion pad is disposed between two adjacent ones of the batteries. There are at least two measuring devices. The acquisition surfaces of the at least two measuring devices have the same orientation, are arranged in the vertical direction, and are disposed as corresponding to the adjacent batteries and the cushion pad.

By enabling two measuring devices to be disposed as respectively corresponding to adjacent batteries and a cushion pad, the two measuring devices can respectively measure heights of the adjacent batteries and the cushion pad, which is conducive to improving measurement efficiency.

In a possible implementation of the present disclosure, the power mechanism includes a nut and a threaded rod. The nut is slidably connected to the base and is fixedly connected to the measuring device, and the threaded rod is rotatably connected to the base and is in threaded connection with the nut.

According to a second aspect, the present disclosure provides a material-conveying production line. The material-conveying production line includes a material conveying member and the height measurement apparatus provided in the first aspect of the present disclosure. The material conveying member has a placement space. The placement space is used for placing an object to be measured, such that the material conveying member is capable of conveying the object to be measured. A material conveying direction of the material conveying member is perpendicular to a second direction. The acquisition surface of the height measurement apparatus faces the placement space.

By enabling the acquisition surface to face the placement space, the height measurement apparatus can measure the height of the object to be measured on the material conveying member, making it possible to reduce manual measurement, which is conducive to improving the working efficiency.

In a possible implementation of the present disclosure, the height measurement apparatus is disposed on a side of the placement space in a third direction. The third direction is perpendicular to the second direction and is perpendicular to the material conveying direction. There are at least two height measurement apparatuses, which are arranged in the material conveying direction.

By disposing the at least two height measurement apparatuses in the material conveying direction, the object to be measured on the material conveying member can be measured at least twice during conveying, which is conducive to improving measurement accuracy. The height measurement apparatus is disposed on the side of the placement space in the third direction, such that the height measurement apparatus refrains from easily interfering with a material on the material conveying member, which is conducive to ensuring smooth conveying of the material.

In a possible implementation of the present disclosure, the at least two height measurement apparatuses include a first height measurement apparatus and a second height measurement apparatus disposed adjacent to each other. An orientation of the acquisition surface of the first height measurement apparatus intersects an orientation of the acquisition surface of the second height measurement apparatus, and an intersection position is located within the placement space.

By enabling the orientation of the acquisition surface of the first height measurement apparatus to intersect the orientation of the acquisition surface of the second height measurement apparatus, with an intersection being located within the placement space, the first height measurement apparatus and the second height measurement apparatus can measure the object to be measured twice at the same moment, resulting in two measurement results that can be verified by each other, which is conducive to improving the measurement precision.

In a possible implementation of the present disclosure, an included angle between the orientation of the acquisition surface of the first height measurement apparatus and the third direction and an included angle between the orientation of the acquisition surface of the second height measurement apparatus and the third direction have the same magnitude but are in opposite directions.

In this way, the improvement of the measurement precision is facilitated.

In a possible implementation of the present disclosure, neither the orientation of the acquisition surface of the first height measurement apparatus nor the orientation of the acquisition surface of the second height measurement apparatus is perpendicular to the material conveying direction.

In this way, the acquisition surface of the first height measurement apparatus and the acquisition surface of the second height measurement apparatus both have large acquisition ranges, which is conducive to improving the measurement precision.

In a possible implementation of the present disclosure, the at least two height measurement apparatuses include the first height measurement apparatus and a third height measurement apparatus. The orientation of the acquisition surface of the first height measurement apparatus is not perpendicular to the material conveying direction. An orientation of the acquisition surface of the third height measurement apparatus is perpendicular to the material conveying direction.

In this way, a measurement result of the first height measurement apparatus and a measurement result of the second height measurement apparatus can be verified by each other, which is conducive to improving the measurement precision.

According to a third aspect, the present disclosure provides a height measurement method, applied to the height measurement apparatus provided in the first aspect of the present disclosure. The height measurement method includes: controlling the power mechanism to drive the measuring device to move relative to the base; recording a position of the measuring device relative to the base when information output by the measuring device switches between first-type information and second-type information; and determining a height of an object to be measured based on the recorded position of the measuring device relative to the base.

When the type of the information output by the measuring device changes, the height of the object to be measured is determined based on the position of the measuring device, such that only few measuring devices are required to measure the height of the object to be measured, resulting in low costs. During the motion of the measuring device in the second direction, the information output by the measuring device switches between the first-type information and the second-type information, indicating that the measuring device in this case is located at a position level with an edge of the object to be measured. Therefore, the height of the object to be measured can be determined based on the position of the measuring device relative to the base in this case.

In a possible implementation of the present disclosure, a second direction is a vertical direction. The controlling the power mechanism to drive the measuring device to move relative to the base includes: controlling the power mechanism to drive the measuring device to move downward from a highest position of a stroke relative to the base, until the information output by the measuring device switches from the second-type information to the first-type information; or controlling the power mechanism to drive the measuring device to move upward from a lowest position of a stroke relative to the base, until the information output by the measuring device switches from the first-type information to the second-type information.

Enabling the measuring device to move unidirectionally relative to the base frame to determine the position of an upper end edge of the object to be measured is conducive to reducing a distance of the motion of the measuring device, thereby improving the measurement efficiency.

In a possible implementation of the present disclosure, during a downward motion from the highest position of the stroke or an upward motion from the lowest position of the stroke of the measuring device relative to the base, the measuring device sequentially moves for preset distances relative to the base to sequentially keep at a plurality of preset positions. The switching of the information output by the measuring device between the first-type information and the second-type information includes: outputting one of the first-type information and the second-type information when the measuring device keeps at a previous one of the preset positions, and outputting the other one of the first-type information and the second-type information when the measuring device keeps at a next one of the preset positions. The height measurement method further includes: the measuring device being in a measuring state when the measuring device keeps at the preset position, and the measuring device being not in the measuring state when the measuring device does not keep at the preset position.

Enabling the measuring device to sequentially keep at the preset positions and to be in the measuring state only when it keeps at the preset position is conducive to reducing power consumption. Moreover, during the motion between the preset positions, the measuring device can move at a fast speed, which is conducive to improving the measurement efficiency.

In a possible implementation of the present disclosure, the height measurement method further includes: when the measuring device is stationary relative to the base, and the information output by the measuring device switches between the first-type information and the second-type information, controlling the power mechanism to drive the measuring device to move downward relative to the base.

In this way, when the height of the object to be measured is reduced due to an impact of an external factor, the measuring device can move downward to move to a position corresponding to an upper end of the object to be measured again, thereby measuring the height of the object to be measured.

### BRIEF DESCRIPTION OF THE DRAWINGS

Various other advantages and benefits will become clear to a person of ordinary skill in the art by reading the following detailed description of exemplary implementations. The accompanying drawings are merely used for illustrating the exemplary implementations and are not intended to constitute a limitation on the present disclosure. In addition, in all the accompanying drawings, the same parts are indicated by the same reference numerals. In the accompanying drawings:
FIG. 1 is a schematic structural diagram of a height measurement apparatus according to some embodiments of the present disclosure;
FIG. 2 is a partial enlarged view of a position A in FIG. 1;
FIG. 3 is a schematic structural diagram of a material-conveying production line according to some embodiments of the present disclosure;
FIG. 4 is a first schematic flowchart of a height measurement method according to some embodiments of the present disclosure;
FIG. 5 is a second schematic flowchart of a height measurement method according to some embodiments of the present disclosure;
FIG. 6 is a third schematic flowchart of a height measurement method according to some embodiments of the present disclosure;
FIG. 7 is a fourth schematic flowchart of a height measurement method according to some embodiments of the present disclosure; and
FIG. 8 is a fifth schematic flowchart of a height measurement method according to some embodiments of the present disclosure.

### Descriptions of reference numerals:

1 - base; 11 - bottom plate; 12 - stand column; 13 - guide rail; 2 - power mechanism; 3 - measuring device; 31 - acquisition surface; 4 - emitter; 41 - emitting surface; 6 - material conveying member; 61 - placement space; 7 - first height measurement apparatus; 71 - first acquisition portion; 72 - first reflection portion; 8 - second height measurement apparatus; 81 - second acquisition portion; 82 - second reflection portion; 9 - third height measurement apparatus; 91 - third acquisition portion; 92 - third reflection portion; a - second direction; b - material conveying direction; c - first direction; and d - third direction.

### DETAILED DESCRIPTION

The embodiments of the technical solutions of the present disclosure will be described in detail below with reference to the accompanying drawings. The following embodiments are only used for illustrating the technical solutions of the present disclosure more explicitly, and are therefore only interpreted as examples, rather than used to limit the protection scope of the present disclosure.

Unless otherwise defined, all technical and scientific terms used herein have the same meanings as those commonly understood by a person skilled in the technical field to which the present disclosure pertains. The terms used herein are only for the purpose of describing particular embodiments and are not intended to limit the present disclosure. The terms "comprising" and "having" as well as any variations thereof in the specification of the present disclosure are intended to cover non-exclusive inclusions.

In the description of the embodiments of the present disclosure, the technical terms "first", "second", "third", and the like are only used for distinguishing between different objects, and should not be understood as indicating or implying relative importance or implying the number, particular order, or primary-secondary relationship of indicated technical features. In the description of the embodiments of the present disclosure, "a plurality of" means two or more, unless otherwise expressly and specifically defined.

Reference herein to "an embodiment" means that a particular feature, structure, or characteristic described with reference to the embodiment may be included in at least one embodiment of the present disclosure. The phrase in various places in the specification may not always refer to the same embodiment, or a separate or an alternative embodiment mutually exclusive of other embodiments. A person skilled in the art explicitly or implicitly understands that the embodiments described herein may be combined with other embodiments.

In the description of the embodiments of the present disclosure, unless otherwise expressly specified and defined, the technical terms "installed", "connected to", "connected with", "fixed", and the like should be interpreted in a broad sense. For example, a connection may refer to a fixed connection, a detachable connection, or an integral connection; or may refer to a mechanical connection or an electrical connector; or may refer to a direct connection or an indirect connection through an intermediate medium; or may refer to an internal communication between two elements or an interaction relationship between the two elements. A person of ordinary skill in the art may understand specific meanings of the terms in the embodiments of the present disclosure based on specific situations.

The present disclosure is described in detail below.

A height measurement apparatus is configured to measure a height of an object to be measured. In the related art, a height measurement apparatus is required to be provided with a large number of measuring devices, where a plurality of measuring devices are respectively arranged at a plurality of height positions, so as to measure heights of objects to be measured that are of different heights. However, the large number of measuring devices results in high costs of the height measurement apparatus.

An embodiment of the present disclosure provides a height measurement apparatus. The height measurement apparatus includes a base, a power mechanism, and a measuring device. The measuring device includes an acquisition surface with an orientation parallel to a first direction. When the measuring device is in a measuring state, and the acquisition surface is opposite an object to be measured, the measuring device outputs first-type information. When the acquisition surface is not opposite the object to be measured, the measuring device outputs second-type information. The measuring device can move relative to the base when driven by the power mechanism, thereby changing a measuring region of the measuring device. A motion of the measuring device relative to the base includes displacement in a second direction. By disposing the measuring device at the output end of the power mechanism, the measuring device can be displaced in the second direction when driven by the power mechanism, such that the measuring device can move to positions matching edges of objects to be measured that are of different heights, so as to measure heights of the objects to be measured that are of different heights. By switching the position of the measuring device in the second direction, only few measuring devices are required to measure a variety of objects to be measured that are of different heights, which is conducive to reducing costs.

In this embodiment of the present disclosure, the type of the object to be measured by the height measurement apparatus is not limited. For example, the height measurement apparatus may be applied to a material-conveying production line and configured to measure a height of a material conveyed on the material-conveying production line, so as to reduce manual measurement and lower working intensity, thereby improving working efficiency. The material may be batteries or the like stacked in a vertical direction.

The battery in this embodiment of the present disclosure may be implemented in various forms. In some embodiments of the present disclosure, the battery may refer to a battery cell. In this embodiment of the present disclosure, the battery cell may be a secondary battery. The secondary battery refers to a battery cell of which active materials can be activated by means of charging for reuse after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the embodiments of the present disclosure.

In some embodiments of the present disclosure, the battery may alternatively refer to a single physical module including one or more battery cells to provide a higher voltage and capacity. When there are a plurality of battery cells, the plurality of battery cells are connected in series, in parallel, or in series-parallel through a bus-bar component. In some embodiments of the present disclosure, the battery may be a battery module. When there are a plurality of battery cells, the plurality of battery cells are arranged and fixed to form a battery module. In some embodiments of the present disclosure, the battery may be a battery pack. The battery pack includes a box body and a battery cell, and the battery cell or the battery module is accommodated in the box body.

The embodiments of the present disclosure are described below with reference to the accompanying drawings.

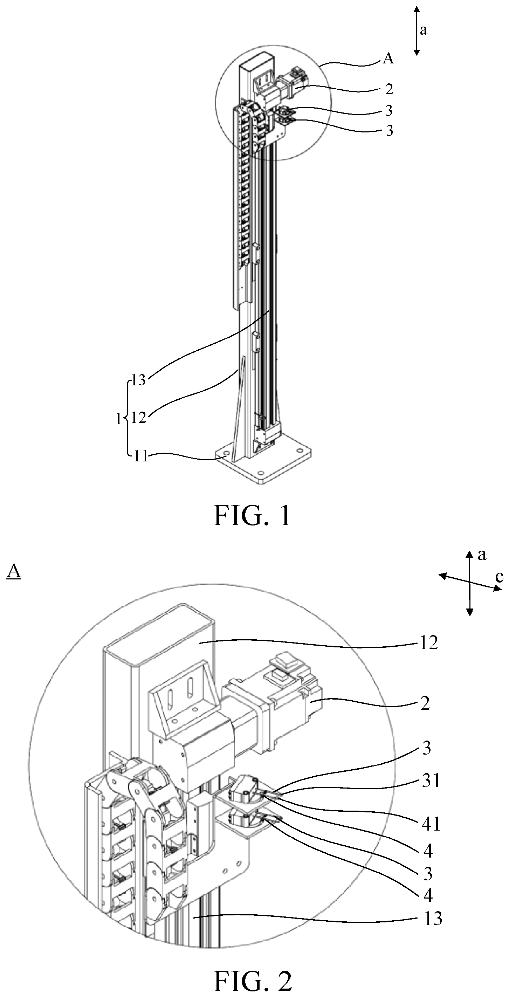

An embodiment of the present disclosure provides a height measurement apparatus. Referring to FIG. 1 and FIG. 2, FIG. 1 is a schematic structural diagram of a height measurement apparatus according to some embodiments of the present disclosure, and FIG. 2 is a partial enlarged view of a position A in FIG. 1. The height measurement apparatus includes a base 1, a power mechanism 2, and a measuring device 3, where the power mechanism 2 is disposed on the base 1. The measuring device 3 includes an acquisition surface 31, where an orientation of the acquisition surface 31 is parallel to a first direction c. When the measuring device 3 is in a measuring state, and the acquisition surface 31 is opposite an object to be measured, the measuring device 3 outputs first-type information. When the acquisition surface 31 is not opposite the object to be measured, the measuring device 3 outputs second-type information. The measuring device 3 is disposed at an output end of the power mechanism 2, such that the measuring device can move relative to the base 1 when driven by the power mechanism 2, thereby changing a measuring region of the measuring device 3. A motion of the measuring device 3 relative to the base 1 includes displacement in a second direction a.

The base 1 in this embodiment of the present disclosure is configured to support the power mechanism 2 and the measuring device 3, and serves as a support for the power mechanism 2 and the measuring device 3. Generally, the base 1 is required to be fixed relative to the object to be measured. In some embodiments of the present disclosure, the base 1 includes a bottom plate 11 and a stand column 12. The bottom plate 11 is used to be placed on a bearing surface, such as the ground. The stand column 12 extends in the second direction a. The power mechanism 2 is disposed on the stand column 12. The power mechanism 2 is configured to drive the measuring device 3 to move along the stand column 12.

The power mechanism 2 in this embodiment of the present disclosure is configured to provide power for the motion of the measuring device 3 relative to the base 1. The power mechanism 2 may be implemented in various forms. The power mechanism 2 may be electric, pneumatic, hydraulic, or the like. For example, it may be a driving mechanism using an electric motor, a driving mechanism using a power cylinder, or the like. In some embodiments of the present disclosure, the power mechanism 2 may be a linear motor, where the linear motor is fixed on the base 1, and an output end of the linear motor can drive the measuring device 3 to move relative to the base 1. The power mechanism 2 may alternatively be a manual driving mechanism. For example, the power mechanism 2 includes a nut and a threaded rod. The nut is slidably connected to the base 1 and is fixedly connected to the measuring device 3, and the threaded rod is rotatably connected to the base 1 and is in threaded connection with the nut. The measuring device 3 is driven to slide relative to the base 1 by rotating the threaded rod relative to the base 1 with a human hand.

The measuring device 3 in this embodiment of the present disclosure has the same meaning as a person skilled in the technical field of the present disclosure usually understands, and can output information according to a change in a variable in an environment. In this embodiment of the present disclosure, the variable is whether the acquisition surface 31 is opposite the object to be measured, that is, whether the acquisition surface 31 is level with the object to be measured in the second direction a and faces the object to be measured. The acquisition surface 31 is an entrance where information in the environment enters the measuring device 3. The acquisition surface 31 may be implemented in various forms. For example, the acquisition surface 31 may be used to acquire visual information, auditory information, electromagnetic waves, or the like.

In this embodiment of the present disclosure, the measuring device 3 being in the measuring state refers to a state in which the acquisition surface 31 can normally acquire information and the measuring device 3 can output different information types according to variations in external information acquired by the acquisition surface 31. That is, when the acquisition surface 31 is opposite the object to be measured, the measuring device 3 outputs the first-type information, and when the acquisition surface 31 is not opposite the object to be measured, the measuring device 3 outputs the second-type information.

The first-type information and the second-type information in this embodiment of the present disclosure may be implemented in various forms. For example, the measuring device 3 may output voltage signals, where one of the first-type information and the second-type information is a high voltage signal, and the other is a low voltage signal. The measuring device 3 may output current signals, where one of the first-type information and the second-type information is a strong current signal, and the other is a weak current signal. The measuring device 3 may output a digital signal, where the first-type information and the second-type information respectively correspond to different digital codes of the digital signal. The measuring device 3 may output pulse signals, where one of the first-type information and the second-type information is a high-frequency pulse signal, and the other is a low-frequency pulse signal; and so on.

In this embodiment of the present disclosure, the measuring region of the measuring device 3 is changed by changing the acquisition surface 31 towards a corresponding region. During the motion of the measuring device 3 relative to the base 1 that is driven by the power mechanism 2, the position of the acquisition surface 31 in the second direction a is changed, such that the acquisition surface 31 is changed towards the corresponding region, thereby changing the measuring region of the measuring device 3. It may be understood that both before and after the measuring region is changed, the measuring device 3 should be in the measuring state, and the orientation of the acquisition surface 31 is unchanged.

In this embodiment of the present disclosure, the motion of the measuring device 3 relative to the base 1 including the displacement in the second direction a means that the motion of the measuring device 3 relative to the base 1 may be in the second direction a or may not be in the second direction a, but needs to have an included angle with respect to the first direction c.

The second direction in this embodiment of the present disclosure may be implemented in various forms, for example, it may be a horizontal direction, a vertical direction, or the like. In some embodiments of the present disclosure, the second direction is the vertical direction. That is, the height measurement apparatus can measure a length of the object to be measured in the vertical direction. For example, in some embodiments of the present disclosure, the second direction is the vertical direction. The height measurement apparatus is configured to measure a height of batteries stacked in the vertical direction. During the motion of the measuring device 3 relative to the base 1, if the information output by the measuring device 3 switches between the first-type information and the second-type information, it reflects that the measuring device 3 moves to a position corresponding to an upper end edge of the object to be measured. In this case, the position of the measuring device 3 relative to the base 1 can reflect the height of the object to be measured.

For ease of understanding, a working principle of the height measurement apparatus in the present disclosure is described below. During the motion of the measuring device 3 relative to the base 1, if information output by the measuring device 3 switches between the first-type information and the second-type information, it reflects that the acquisition surface 31 moves to a critical position switching between being opposite and being not opposite the object to be measured, that is, the acquisition surface 31 moves to a position corresponding to an edge of the object to be measured. In this case, the position of the measuring device 3 relative to the base 1 can reflect the position of the edge of the object to be measured. In this way, the height measurement apparatus measures the height of the object to be measured.

It may be understood that performing measurement with few measuring devices 3 not only has low material costs, but also has low time costs for processing, assembly, repair, and replacement, which is conducive to reducing downtime due to an anomaly of the measuring device 3.

In some embodiments of the present disclosure, referring to FIG. 1 and FIG. 2, the measuring device 3 is slidably connected to the base 1, such that the measuring device is capable of moving relative to the base 1 when driven by the power mechanism 2.

In this embodiment of the present disclosure, the slidable connection between the measuring device 3 and the base 1 may be implemented in various forms. For example, the slidable connection may be implemented through a guide rail 13 and a slide block, or may be implemented by means of fitting of a plug column and a slide hole.

By slidably connecting the measuring device 3 to the base 1, the position of the measuring device 3 in the second direction a can be conveniently adjusted. Moreover, the motion of the measuring device 3 relative to the base 1 is stable, and motion efficiency is high. During the motion, the orientation of the acquisition surface 31 remains unchanged, and the acquisition surface 31 can always acquire information, that is, the acquisition surface 31 can acquire information at many positions in the second direction a, which is conducive to improving the adaptability of the height measurement apparatus to objects to be measured that are of different heights.

In some embodiments of the present disclosure, referring to FIG. 1 and FIG. 2, the motion of the measuring device 3 relative to the base 1 that is driven by the power mechanism 2 is movement in the second direction a.

By enabling the motion of the measuring device relative to the base to be movement in the second direction, the motion of the measuring device in the second direction has high efficiency, which is conducive to improving working efficiency of the height measurement apparatus.

In some embodiments of the present disclosure, referring to FIG. 1 and FIG. 2, the measuring device 3 is slidably connected to the base 1 in the second direction a.

By slidably connecting the measuring device 3 to the base 1 in the second direction a, the motion of the measuring device 3 in the second direction a has high efficiency, which is conducive to improving working efficiency of the height measurement apparatus.

In some embodiments of the present disclosure, referring to FIG. 1 and FIG. 2, the height measurement apparatus further includes an emitter 4. The emitter 4 includes an emitting surface 41. An orientation of the emitting surface 41 is perpendicular to the second direction. The emitting surface 41 is level with the acquisition surface 31 in the second direction a. The emitting surface 41 and the acquisition surface 31 synchronously switch between states of being opposite and being not opposite the object to be measured. When the emitting surface 41 is not opposite the object to be measured, the emitting surface 41 emits information to the acquisition surface 31, such that the measuring device 3 outputs the second-type information. When the emitting surface 41 is opposite the object to be measured, the information emitted by the emitting surface 41 is blocked by the object to be measured, such that the measuring device 3 outputs the first-type information.

The emitter 4 in this embodiment of the present disclosure may be implemented in various forms, for example, it may be configured to emit visual information, sound information, electromagnetic waves, or the like. For example, in some embodiments of the present disclosure, the emitter 4 is configured to emit laser. In this way, a measurement effect of the measuring device 3 is relatively precise.

Whether the acquisition surface 31 is opposite the object to be measured is confirmed by a state of whether the information emitted by the emitting surface 41 is blocked by the object to be measured, which is conducive to measurement precision of the measuring device 3. The orientation of the emitting surface 41 is perpendicular to the second direction a, and the emitting surface 41 is level with the acquisition surface 31 in the second direction a, that is, the information emitted by the emitting surface 41 is level with the acquisition surface 31 in the second direction a. If the emitted information is blocked, the acquisition surface 31 fails to acquire the emitted information, indicating that the acquisition surface 31 is opposite the object to be measured. If the emitted information is not blocked, the emitted information is acquired by the acquisition surface 31, indicating that the acquisition surface 31 is not opposite the object to be measured. This is conducive to improving the measurement precision.

In some embodiments of the present disclosure, referring to FIG. 1 and FIG. 2, the emitting surface 41 is disposed opposite the acquisition surface 31. An accommodating space is provided between the emitting surface 41 and the acquisition surface 31 in a direction in which the emitting surface 41 is disposed opposite the acquisition surface 31. The accommodating space is used for placing the object to be measured therein.

In some embodiments of the present disclosure, referring to FIG. 1 and FIG. 2, the emitter 4 and the measuring device 3 synchronously move relative to the base 1 in the second direction a, such that the emitting surface 41 is level with the acquisition surface 31 in the second direction a.

In this embodiment of the present disclosure, the emitter 4 and the measuring device 3 synchronously moving relative to the base 1 means that the emitter 4 and the measuring device 3 are fixed relative to each other, that is, they have the same moving speed and direction relative to the base 1.

By enabling the emitter 4 and the measuring device 3 to synchronously move relative to the base 1, the emitter 4 can always keep at a position corresponding to the measuring device 3, and the information emitted by the emitter 4 can always keep at a position level with the acquisition surface 31. In this way, only few emitters 4 are required to satisfy the measurement requirements of measuring devices 3 of different heights, which is conducive to reducing costs.

In some embodiments of the present disclosure, referring to FIG. 1 and FIG. 2, the emitter 4 is disposed at the output end of the power mechanism 2, such that the emitter 4 and the measuring device 3 synchronously move relative to the base 1. An orientation of the emitting surface 41 is the same as the orientation of the acquisition surface 31. The height measurement apparatus further includes a reflection structure. The emitting surface 41 and the acquisition surface 31 are both disposed opposite the reflection structure in the first direction c. The reflection structure is used for reflecting a signal emitted by the emitting surface 41 to the acquisition surface 31.

By disposing both the emitter 4 and the measuring device 3 at the output end of the power mechanism 2, a synchronous motion of the emitter 4 and the measuring device 3 can be conveniently implemented. The reflection structure can reflect the signal emitted by the emitting surface 41 to the acquisition surface 31, such that when the emitter 4 and the measuring device 3 are both disposed at the output end of the power mechanism 2, a long transmission path for the information emitted by the emitter 4 can still be ensured, facilitating the transmission path for the information emitted by the emitter 4 passing through the object to be measured, that is, reserving a large space for disposing the object to be measured, thereby facilitating the disposing of the object to be measured.

The reflection mechanism in this embodiment of the present disclosure may be implemented in various forms, for example, it may be an acoustic wave reflection structure, an electromagnetic wave reflection structure, a specular reflection mechanism, or the like.

In some embodiments of the present disclosure, referring to FIG. 1 and FIG. 2, the second direction is a vertical direction. The height measurement apparatus is configured to measure a height of batteries stacked in the vertical direction a. A cushion pad is disposed between two adjacent ones of the batteries. There are at least two measuring devices 3. The acquisition surfaces 31 of the at least two measuring devices 3 have the same orientation, are arranged in the vertical direction a, and are disposed as corresponding to the adjacent batteries and the cushion pad.

By enabling two measuring devices 3 to be disposed as respectively corresponding to adjacent batteries and a cushion pad, the two measuring devices 3 can respectively measure heights of the adjacent batteries and the cushion pad, which is conducive to improving measurement efficiency, and can also be configured to detect whether there is a foam pad on the top of the stacked batteries.

Generally, in some embodiments of the present disclosure, the cushion pad is a foam pad.

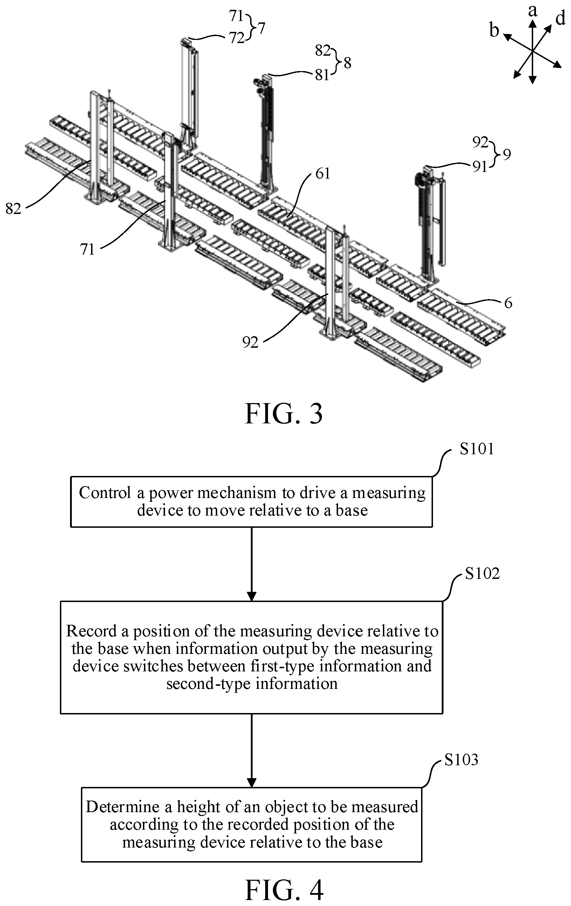

An embodiment of the present disclosure further provides a material-conveying production line. Referring to FIG. 1, FIG. 2, and FIG. 3, FIG. 3 is a schematic structural diagram of a material-conveying production line according to some embodiments of the present disclosure. The material-conveying production line includes a material conveying member 6 and the height measurement apparatus. The material conveying member 6 has a placement space 61. The placement space 61 is used for placing an object to be measured, such that the material conveying member 6 is capable of conveying the object to be measured. A material conveying direction b of the material conveying member is perpendicular to a second direction a. The acquisition surface 31 of the height measurement apparatus faces the placement space 61.

The material-conveying production line in this embodiment of the present disclosure may have various applications, for example, it may be applied to a cell large-package feeding station or discharging station of a module line, or the like.

By enabling the acquisition surface 31 to face the placement space 61, the height measurement apparatus can measure the height of the object to be measured on the material conveying member 6, making it possible to reduce manual measurement, which is conducive to improving the working efficiency.

In some embodiments of the present disclosure, referring to FIG. 1, FIG. 2, and FIG. 3, the height measurement apparatus is disposed on a side of the placement space 61 in a third direction d. The third direction d is perpendicular to the second direction a and is perpendicular to the material conveying direction b of the material conveying member 6. There are at least two height measurement apparatuses, which are arranged in the material conveying direction b.

By disposing the at least two height measurement apparatuses in the material conveying direction b, the object to be measured on the material conveying member 6 can be measured at least twice during conveying, which is conducive to improving measurement accuracy. The height measurement apparatus is disposed on the side of the placement space 61 in the third direction d, such that the height measurement apparatus refrains from easily interfering with a material on the material conveying member 6, which is conducive to ensuring smooth conveying of the material.

In some embodiments of the present disclosure, referring to FIG. 1, FIG. 2, and FIG. 3, the at least two height measurement apparatuses include a first height measurement apparatus 7 and a second height measurement apparatus 8 disposed adjacent to each other. An orientation of the acquisition surface 31 of the first height measurement apparatus 7 intersects an orientation of the acquisition surface 31 of the second height measurement apparatus 8, and an intersection position is located within the placement space 61.

By enabling the orientation of the acquisition surface 31 of the first height measurement apparatus 7 to intersect the orientation of the acquisition surface 31 of the second height measurement apparatus 8 with an intersection being located within the placement space 61, the first height measurement apparatus 7 and the second height measurement apparatus can measure the object to be measured twice at the same moment, resulting in two measurement results that can be verified by each other, which is conducive to improving the measurement precision.

In some embodiments of the present disclosure, referring to FIG. 1, FIG. 2, and FIG. 3, neither the orientation of the acquisition surface 31 of the first height measurement apparatus 7 nor the orientation of the acquisition surface 31 of the second height measurement apparatus 8 is perpendicular to the material conveying direction b.

In this way, the acquisition surface 31 of the first height measurement apparatus 7 and the acquisition surface 31 of the second height measurement apparatus 8 both have large acquisition ranges, which is conducive to improving the measurement precision.

In some embodiments of the present disclosure, referring to FIG. 1, FIG. 2, and FIG. 3, an included angle between the orientation of the acquisition surface 31 of the first height measurement apparatus 7 and the third direction d and an included angle between the orientation of the acquisition surface 31 of the second height measurement apparatus 8 and the third direction d have the same magnitude but are in opposite directions. In this way, the improvement of the measurement precision is facilitated.

In some embodiments of the present disclosure, referring to FIG. 1, FIG. 2, and FIG. 3, the first height measurement apparatus 7 includes a first acquisition portion 71 and a first reflection portion 72, and the first height measurement apparatus 7 includes a first acquisition portion 71 and a first reflection portion 72. The first acquisition portion 71 and the second acquisition portion 81 each include an emitting surface 41 and an acquisition surface 31. The first reflection portion 72 and the second reflection portion 82 each include a reflection structure. The first reflection portion 72 is used to reflect a signal emitted by the emitting surface 41 of the first acquisition portion 71 to the acquisition surface 31 of the first acquisition portion 71. The second reflection portion 82 is used to reflect a signal emitted by the emitting surface 41 of the second acquisition portion 81 to the acquisition surface 31 of the second acquisition portion 81. Along an orientation of the acquisition surface 31 of the first acquisition portion 71, a connecting line between the acquisition surface 31 of the first acquisition portion 71 and the reflection structure of the first reflection portion 72 is a first connecting line. Along an orientation of the acquisition surface 31 of the second acquisition portion 81, a connecting line between the acquisition surface 31 of the second acquisition portion 81 and the reflection structure of the second reflection portion 82 is a second connecting line. The first connecting line and the second connecting line intersect and are both perpendicular to the second direction a. A material conveying path of the material conveying member 6 passes through a position where the first connecting line and the second connecting line intersect, such that the orientation of the acquisition surface 31 of the first height measurement apparatus 7 intersects the orientation of the acquisition surface 31 of the second height measurement apparatus 8 with an intersection position being located within the placement space 61. In this way, the material-feeding production line is conveniently implemented.

In some embodiments of the present disclosure, referring to FIG. 1, FIG. 2, and FIG. 3, the at least two height measurement apparatuses include the first height measurement apparatus 7 and a third height measurement apparatus 9. The orientation of the acquisition surface 31 of the first height measurement apparatus 7 is not perpendicular to the material conveying direction b. An orientation of the acquisition surface 31 of the third height measurement apparatus 9 is perpendicular to the material conveying direction b.

In this way, a measurement result of the first height measurement apparatus 7 and a measurement result of the second height measurement apparatus 8 can be verified by each other, which is conducive to improving the measurement precision.

In some embodiments of the present disclosure, referring to FIG. 1, FIG. 2, and FIG. 3, the third height measurement apparatus 9 includes a third acquisition portion 91 and a third reflection portion 92. An arrangement direction of the third acquisition portion 91 and the third reflection portion 92 is perpendicular to the material conveying direction b, that is, the orientation of the acquisition surface 31 of the third height measurement apparatus 9 is perpendicular to the material conveying direction b. In this way, the material-conveying production line is conveniently implemented.

An embodiment of the present disclosure further provides a height measurement method, applied to the height measurement apparatus provided in the embodiments of the present disclosure. Referring to FIG. 1, FIG. 2, and FIG. 4, FIG. 4 is a first schematic flowchart of a height measurement method according to some embodiments of the present disclosure. The height measurement method includes the following steps:
S101: Control the power mechanism to drive the measuring device to move relative to the base.
S102: Record a position of the measuring device relative to the base when information output by the measuring device switches between first-type information and second-type information.
S103: Determine a height of an object to be measured according to the recorded position of the measuring device relative to the base.

When the type of the information output by the measuring device 3 changes, the height of the object to be measured is determined based on the position of the measuring device 3, such that only few measuring devices 3 are required to measure the height of the object to be measured, resulting in low costs. During the motion of the measuring device 3 in the second direction a, the information output by the measuring device 3 switches between the first-type information and the second-type information, indicating that the measuring device 3 in this case is located at a position level with an edge of the object to be measured. Therefore, the height of the object to be measured can be determined based on the position of the measuring device 3 relative to the base 1 in this case.

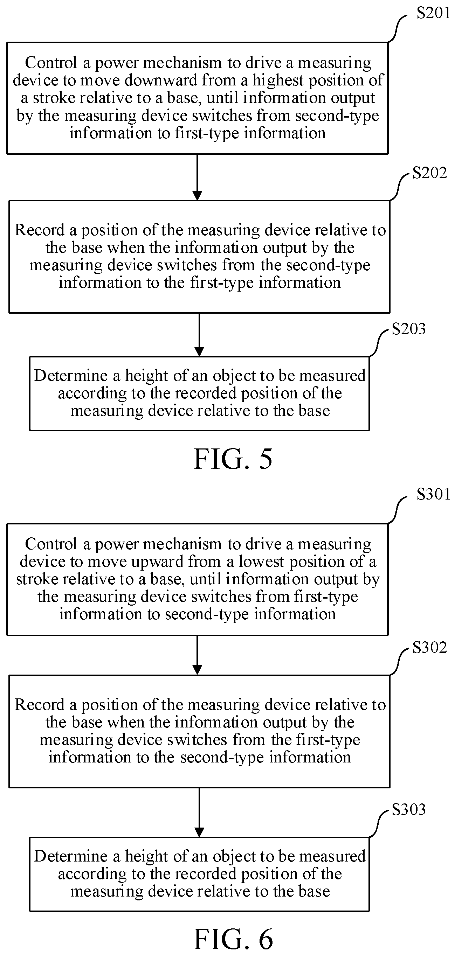

In some embodiments of the present disclosure, referring to FIG. 1, FIG. 2, FIG. 5, and FIG. 6, FIG. 5 is a second schematic flowchart of a height measurement method according to some embodiments of the present disclosure, and FIG. 6 is a third schematic flowchart of a height measurement method according to some embodiments of the present disclosure. A second direction a is a vertical direction. The controlling the power mechanism 2 to drive the measuring device 3 to move relative to the base 1 includes: controlling the power mechanism 2 to drive the measuring device 3 to move downward from a highest position of a stroke relative to the base 1, until the information output by the measuring device 3 switches from the second-type information to the first-type information; or controlling the power mechanism 2 to drive the measuring device 3 to move upward from a lowest position of the stroke relative to the base 1, until the information output by the measuring device 3 switches from the first-type information to the second-type information.

That is, the height measurement method includes the following steps:
S201: Control the power mechanism to drive the measuring device to move downward from a highest position of a stroke relative to the base, until information output by the measuring device switches from second-type information to first-type information.
S202: Record a position of the measuring device relative to the base when the information output by the measuring device switches from the second-type information to the first-type information.
S203: Determine a height of an object to be measured according to the recorded position of the measuring device relative to the base.

Alternatively, the height measurement method includes the following steps: S301: Control the power mechanism to drive the measuring device to move upward from a lowest position of a stroke relative to the base, until information output by the measuring device switches from first-type information to second-type information.

S302: Record a position of the measuring device relative to the base when the information output by the measuring device switches from the first-type information to the second-type information.

S303: Determine a height of an object to be measured according to the recorded position of the measuring device relative to the base.

Enabling the measuring device to move unidirectionally relative to the base frame to determine the position of an upper end edge of the object to be measured is conducive to reducing a distance of the motion of the measuring device, thereby improving the measurement efficiency.

In some embodiments of the present disclosure, the controlling the power mechanism 2 to drive the measuring device 3 to move relative to the base 1 includes: controlling the power mechanism 2 to drive the measuring device 3 to move downward from a highest position of a stroke relative to the base 1, until information output by the measuring device 3 switches from second-type information to first-type information. It may be understood that, the downward motion of the measuring device 3 from the highest position of the stroke relative to the base 1 is conducive to reducing a motion distance of the measuring device 3, thereby improving measurement efficiency.

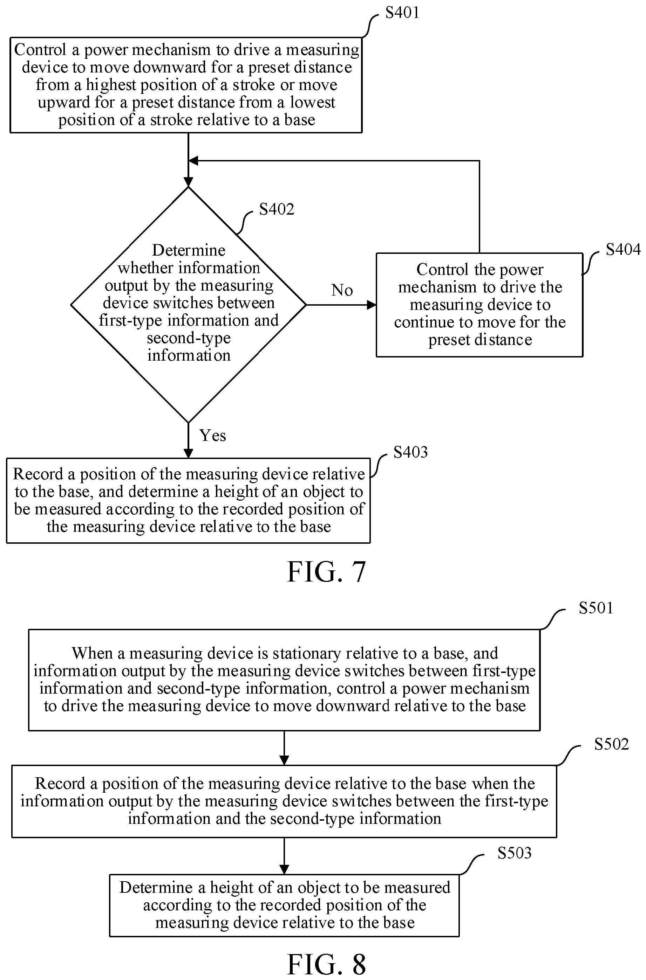

In some embodiments of the present disclosure, referring to FIG. 1, FIG. 2, and FIG. 7, FIG. 7 is a fourth schematic flowchart of a height measurement method according to some embodiments of the present disclosure. During the downward motion from the highest position of the stroke or upward motion from the lowest position of the stroke of the measuring device 3 relative to the base 1, the measuring device 3 sequentially moves for preset distances relative to the base 1 to sequentially keep at a plurality of preset positions. The switching of the information output by the measuring device 3 between the first-type information and the second-type information includes: outputting one of the first-type information and the second-type information when the measuring device 3 keeps at a previous one of the preset positions, and outputting the other one of the first-type information and the second-type information when the measuring device 3 keeps at a next one of the preset positions. The height measurement method further includes: the measuring device 3 being in a measuring state when the measuring device 3 keeps at the preset position, and the measuring device 3 being not in the measuring state when the measuring device 3 does not keep at the preset position.

That is, the height measurement method includes the following steps:
S401: Control the power mechanism to drive the measuring device to move downward for a preset distance from a highest position of a stroke or move upward for a preset distance from a lowest position of a stroke relative to the base.
S402: Determine whether information output by the measuring device switches between first-type information and second-type information.
S403: If yes, record a position of the measuring device relative to the base, and determine a height of an object to be measured according to the recorded position of the measuring device relative to the base.
S404: If not, control the power mechanism to drive the measuring device to continue to move for the preset distance, and return to S402.

In this embodiment of the present disclosure, distances between the plurality of preset positions in the second direction a may be the same or may be different.

Enabling the measuring device 3 to sequentially keep at the preset positions and to be in the measuring state only when it keeps at the preset position is conducive to reducing power consumption. Moreover, during the motion between the preset positions, the measuring device 3 can move at a fast speed, which is conducive to improving the measurement efficiency.

In some embodiments of the present disclosure, referring to FIG. 1, FIG. 2, and FIG. 8, FIG. 8 is a fifth schematic flowchart of a height measurement method according to some embodiments of the present disclosure. The height measurement method further includes: when the measuring device 3 is stationary relative to the base 1, and the information output by the measuring device 3 switches between the first-type information and the second-type information, controlling the power mechanism 2 to drive the measuring device 3 to move downward relative to the base 1.

That is, the height measurement method includes the following steps:
S501: When the measuring device is stationary relative to the base, and information output by the measuring device switches between first-type information and second-type information, control the power mechanism to drive the measuring device to move downward relative to the base.
S502: Record a position of the measuring device relative to the base when the information output by the measuring device switches between the first-type information and the second-type information.
S503: Determine a height of an object to be measured according to the recorded position of the measuring device relative to the base.

In this way, when the height of the object to be measured is reduced due to an impact of an external factor, the measuring device 3 can move downward to move to a position corresponding to an upper end of the object to be measured again, thereby measuring the height of the object to be measured.

For example, in a case where the height measurement apparatus is configured to measure stacked batteries, the stacked batteries are discharged layer by layer during discharging, and the height of the stacked batteries gradually decreases. When one or more layers of the stacked batteries are discharged, the measuring device 3 can correspondingly move downward to a next preset position, to detect whether there is a battery at the corresponding position.

In some embodiments of the present disclosure, referring to FIG. 1 and FIG. 2, the height measurement apparatus is applied to the cell large-package feeding station of the module line, and is configured to measure the number of layers of cells and foam pads that are stacked in the vertical direction a. The foam pad is used to be disposed between two adjacent cells and is located on the top of a cell at a top end. The cell and the foam pad each have a plate-shaped structure. During measurement, a cell large-package is in place, and the measuring device 3 of the height measurement apparatus moves to the highest position of the stroke, so as to start the measurement. Whether the acquisition surface 31 is opposite stacked cells is determined based on the type of the information output by the measuring device 3. If yes, corresponding layer height data is obtained. If not, the measuring device moves to a next preset position and keeps at the preset position, and so on until it is determined whether the acquisition surface 31 is opposite the stacked cells, in which case the corresponding layer height data and the presence of a foam pad can be obtained. During discharging, the measuring device 3 can also correspondingly move downward to a next preset position, so as to detect whether there is a cell at the next preset position.

The foregoing embodiments are for description of the technical solutions of the present disclosure only rather than for limiting the present disclosure. Although the present disclosure has been described in detail with reference to the foregoing embodiments, a person of ordinary skill in the art should appreciate that they can still make modifications to the technical solutions described in the embodiments or make equivalent replacements to some or all technical features thereof. These modifications or replacements do not cause the nature of the corresponding technical solutions to depart from the scope of the technical solutions of the embodiments of the present disclosure, and shall all fall within the scope of the specification of the present disclosure. In particular, various technical features mentioned in the embodiments can be combined in any manner provided that there is no structural conflict.

## Claims

1. A height measurement apparatus, comprising:
a base;
a power mechanism disposed on the base; and
a measuring device, comprising an acquisition surface, wherein an orientation of the acquisition surface is parallel to a first direction; when the measuring device is in a measuring state, and the acquisition surface is opposite an object to be measured, the measuring device outputs first-type information; when the acquisition surface is not opposite the object to be measured, the measuring device outputs second-type information; the measuring device is disposed at an output end of the power mechanism, such that the measuring device is capable of moving relative to the base when driven by the power mechanism, thereby changing a measuring region of the measuring device; and a motion of the measuring device relative to the base comprises displacement in a second direction, the second direction being perpendicular to the first direction.

2. The height measurement apparatus according to claim 1, wherein the measuring device is slidably connected to the base, such that the measuring device is capable of moving relative to the base when driven by the power mechanism.

3. The height measurement apparatus according to claim 2, further comprising a guide rail and a slide block capable of matching each other to slide, wherein the measuring device is slidably connected to the base through the guide rail and the slide block.

4. The height measurement apparatus according to claim 1, wherein the motion of the measuring device relative to the base that is driven by the power mechanism is movement in the second direction.

5. The height measurement apparatus according to claim 1, further comprising an emitter, wherein the emitter comprises an emitting surface, an orientation of the emitting surface is perpendicular to the second direction, the emitting surface is level with the acquisition surface in the second direction, and the emitting surface and the acquisition surface synchronously switch between states of being opposite and being not opposite the object to be measured; when the emitting surface is not opposite the object to be measured, the emitting surface emits information to the acquisition surface, such that the measuring device outputs the second-type information; and when the emitting surface is opposite the object to be measured, the information emitted by the emitting surface is blocked by the object to be measured, such that the measuring device outputs the first-type information.

6. The height measurement apparatus according to claim 5, wherein the emitting surface is disposed opposite the acquisition surface, and an accommodating space is provided between the emitting surface and the acquisition surface in a direction in which the emitting surface is disposed opposite the acquisition surface.

7. The height measurement apparatus according to claim 5, wherein the emitter and the measuring device synchronously move relative to the base in the second direction, such that the emitting surface is level with the acquisition surface in the second direction.

8. The height measurement apparatus according to claim 7, wherein the emitter is disposed at the output end of the power mechanism, such that the emitter and the measuring device synchronously move relative to the base; an orientation of the emitting surface is the same as the orientation of the acquisition surface; and the height measurement apparatus further comprises a reflection structure, wherein the emitting surface and the acquisition surface are both disposed opposite the reflection structure in the first direction, and the reflection structure is used for reflecting a signal emitted by the emitting surface to the acquisition surface.

9. The height measurement apparatus according to any one of claims 1 to 8, wherein the second direction is a vertical direction; the height measurement apparatus is configured to measure a height of batteries stacked in the vertical direction, wherein a cushion pad is disposed between two adjacent ones of the batteries; and there are at least two measuring devices, wherein the acquisition surfaces of the at least two measuring devices have the same orientation, are arranged in the vertical direction, and are disposed as corresponding to the adjacent batteries and the cushion pad.

10. The height measurement apparatus according to any one of claims 1 to 8, wherein the power mechanism comprises a nut and a threaded rod, the nut is slidably connected to the base and is fixedly connected to the measuring device, and the threaded rod is rotatably connected to the base and is in threaded connection with the nut.

11. A material-conveying production line, comprising:
a material conveying member having a placement space, wherein the placement space is used for placing an object to be measured, such that the material conveying member is capable of conveying the object to be measured, and a material conveying direction of the material conveying member is perpendicular to a second direction; and
the height measurement apparatus according to any one of claims 1 to 10, wherein the acquisition surface faces the placement space.

12. The material-conveying production line according to claim 11, wherein the height measurement apparatus is disposed on a side of the placement space in a third direction, the third direction being perpendicular to the second direction and being perpendicular to the material conveying direction; and there are at least two height measurement apparatuses, which are arranged in the material conveying direction.

13. The material-conveying production line according to claim 12, wherein the at least two height measurement apparatuses comprise a first height measurement apparatus and a second height measurement apparatus disposed adjacent to each other, wherein an orientation of the acquisition surface of the first height measurement apparatus intersects an orientation of the acquisition surface of the second height measurement apparatus, and an intersection position is located within the placement space.

14. The material-conveying production line according to claim 13, wherein an included angle between the orientation of the acquisition surface of the first height measurement apparatus and the third direction and an included angle between the orientation of the acquisition surface of the second height measurement apparatus and the third direction have the same magnitude but are in opposite directions.

15. The material-conveying production line according to claim 13, wherein neither the orientation of the acquisition surface of the first height measurement apparatus nor the orientation of the acquisition surface of the second height measurement apparatus is perpendicular to the material conveying direction.

16. The material-conveying production line according to any one of claims 12 to 15, wherein the at least two height measurement apparatuses comprise the first height measurement apparatus and a third height measurement apparatus, wherein the orientation of the acquisition surface of the first height measurement apparatus is not perpendicular to the material conveying direction, and an orientation of the acquisition surface of the third height measurement apparatus is perpendicular to the material conveying direction.

17. A height measurement method, applied to the height measurement apparatus according to any one of claims 1 to 10, and comprising:
controlling the power mechanism to drive the measuring device to move relative to the base;
recording a position of the measuring device relative to the base when information output by the measuring device switches between first-type information and second-type information; and
determining a height of an object to be measured based on the recorded position of the measuring device relative to the base.

18. The height measurement method according to claim 17, wherein a second direction is a vertical direction, and the controlling the power mechanism to drive the measuring device to move relative to the base comprises:
controlling the power mechanism to drive the measuring device to move downward from a highest position of a stroke relative to the base, until the information output by the measuring device switches from the second-type information to the first-type information;
or controlling the power mechanism to drive the measuring device to move upward from a lowest position of a stroke relative to the base, until the information output by the measuring device switches from the first-type information to the second-type information.

19. The height measurement method according to claim 18, wherein during a downward motion from the highest position of the stroke or an upward motion from the lowest position of the stroke of the measuring device relative to the base, the measuring device sequentially moves for preset distances relative to the base to sequentially keep at a plurality of preset positions; and
the switching of the information output by the measuring device between the first-type information and the second-type information comprises: outputting one of the first-type information and the second-type information when the measuring device keeps at a previous one of the preset positions, and outputting the other one of the first-type information and the second-type information when the measuring device keeps at a next one of the preset positions; and
the height measurement method further comprises: the measuring device being in a measuring state when the measuring device keeps at the preset position, and the measuring device being not in the measuring state when the measuring device does not keep at the preset position.

20. The height measurement method according to claim 18 or 19, further comprising: when the measuring device is stationary relative to the base, and the information output by the measuring device switches between the first-type information and the second-type information, controlling the power mechanism to drive the measuring device to move downward relative to the base.
